# EUROPEAN PATENT APPLICATION

(11) **EP 4 657 465 A1**
(43) Date of publication of application: **03.12.2025**
(21) Application number: 24178527.8
(22) Date of filing: 28.05.2024
(51) Int. Cl.: H01B 7/04, H01B 7/14, H01B 7/282, H01B 7/285, H02G 9/12

(54) **DYNAMIC SUBMARINE POWER CABLE FOR DEEP-SEA APPLICATIONS**

(71) Applicant: NKT HV Cables AB, 371 60 Lyckeby (SE)
(72) Inventor: TORVALDSSON, Henrik, Karlskrona (SE); TYRBERG, Andreas, Lyckeby (SE); TJAHJANTO, Denny, Sundbyberg (SE); FROHNE, Christian, Hannover (DE); POURRAHIMI, Amir Masoud, Västerås (SE)
(74) Representative: Kransell & Wennborg KB

(57) **Abstract**

A dynamic submarine power cable (1) for deep-sea applications, comprising: a conductor (5), an insulation system (7) arranged around the conductor (5), the insulation system (7) comprising an inner semiconducting layer (7a) arranged around the conductor (5), an insulation layer (7b) arranged around the inner semiconducting layer (7a), and an outer semiconducting layer (7c) arranged around the insulation layer (7b), a bedding layer (9) arranged around the insulation system (7), and a longitudinally welded corrugated metallic water barrier (11) arranged around the bedding layer (9), wherein the bedding layer (9) fills the corrugations of the corrugated metallic water barrier (11), wherein the bedding layer (9) comprises a single layer which has an initial stiffness at onset of compressive stress to provide structural support against external hydrostatic pressure exerted on the metallic water barrier (11), and an increased elasticity as compared to the initial stiffness when the compressive stress has reached a stress threshold to absorb cyclic thermal expansion and contraction of the insulation layer (7), or wherein the bedding layer (9) comprises an outer layer and an inner layer, wherein the outer layer fills the corrugations and is stiffer than the inner layer and provides structural support against external hydrostatic pressure exerted on the corrugated metallic water barrier (11), the inner layer providing elasticity to absorb cyclic thermal expansion and contraction of the insulation layer (7).

## Description

### TECHNICAL FIELD

The present disclosure generally relates to dynamic submarine power cables.

### BACKGROUND

Dynamic submarine power cables are suspended from a floating structure, such as a floating wind turbine, to the seabed. Such cables are designed with better fatigue properties than other submarine power cable, to withstand load cycles due to constant wave motion.

Dynamic submarine power cables may be provided with a metallic water barrier such as a longitudinally welded metal sheath. The metallic water barrier may be corrugated along the axial direction of the cable to improve the fatigue properties of the cable.

Due to the corrugation, there is a spacing between the inner surface of the corrugation ridges and the cable layer directly underneath the metallic water barrier and typically also between the inner surface of the corrugation valleys and the directly underlying cable layer.

Common corrugated metallic water barriers may not be able to withstand the ambient hydrostatic pressure in deep-sea installations, where the hydrostatic pressure may be several hundred bar, without plastic deformation. As a result, the fatigue properties of the dynamic submarine power cable may deteriorate.

There are designs that provide better protection against high hydrostatic pressure, such as disclosed in EP3084779, which employs a dielectric liquid between the insulation system and the water barrier to counteract radial pressure, and EP2896053, which provides a specific configuration of the corrugations. The solution of EP3084779 however relies on oil as the liquid, and the solution of EP2896053 may not be able to withstand depths of several thousand metres.

### SUMMARY

A bedding layer arranged directly underneath the metallic water barrier should be soft/compressive enough to compensate for the expansion and compression of the insulation system during thermal cycles resulting from different load conditions. However, such elasticity results in that the bedding layer cannot support the metallic water barrier from the inside to withstand the ambient hydrostatic pressure in a deep-sea environment.

With deep-sea is herein meant depths of up to several thousand metres, such as up to 3000 m, 4000 m, or 5000 m depths, where the ambient hydrostatic pressure is in the order of 100 bar.

In view of the above an object of the present disclosure is to provide a dynamic submarine power cable which solves or at least mitigates the problems of the prior art.

There is hence according to a first aspect of the present disclosure provided a dynamic submarine power cable for deep-sea applications, comprising: a conductor, an insulation system arranged around the conductor, the insulation system comprising an inner semiconducting layer arranged around the conductor, an insulation layer arranged around the inner semiconducting layer, and an outer semiconducting layer arranged around the insulation layer, a bedding layer arranged around the insulation system, and a longitudinally welded corrugated metallic water barrier arranged around the bedding layer, wherein the bedding layer fills the corrugations of the metallic water barrier, wherein the bedding layer comprises a single layer which has an initial stiffness at onset of compressive stress to provide structural support against external hydrostatic pressure exerted on the corrugated metallic water barrier, and an increased elasticity as compared to the initial stiffness when the compressive stress has reached a stress threshold to absorb cyclic thermal expansion and contraction of the insulation layer, or wherein the bedding layer comprises an outer layer and an inner layer, wherein the outer layer fills the corrugations and is stiffer than the inner layer and provides structural support against external hydrostatic pressure exerted on the corrugated metallic water barrier, the inner layer providing elasticity to absorb cyclic thermal expansion and contraction of the insulation layer.

The bedding layer provides structural support to the metallic water barrier, with the ability to expand and contract radially during thermal cycles, to compensate for the cyclic thermal expansion/contraction of the insulation system and additionally provides structural support against high external hydrostatic pressure to minimise the risk of collapse of the corrugated metallic water barrier. The lifetime of the dynamic submarine power cable can thereby be extended also if the dynamic submarine power cable is installed in a deep-sea environment.

The dynamic submarine power cable may be an AC dynamic submarine power cable or a DC dynamic submarine power cable.

The dynamic submarine power cable may be a single core or a multi-core dynamic submarine power cable.

The dynamic submarine power cable may be a high voltage dynamic submarine power cable. The dynamic submarine power cable may for example be rated for at least 72 kV nominal voltage.

The metallic water barrier may for example comprise copper or a copper alloy.

According to one embodiment the bedding layer comprises polymer foam.

According to one embodiment the polymer foam comprises a polyether polyol, a polyolefin, such as a thermoplastic polyolefin elastomer or an ethylene copolymer, or ethylene propylene diene monomer rubber (EPDM), or silicone rubber.

Examples of suitable ethylene copolymers are Ethylene-Vinyl Acetate (EVA), Ethylene Butyl Acrylate copolymer (EBA), and Ethylene Acrylic Acid copolymer (EAA).

The polyether polyol may be a linear polyether polyol.

The polymer foam may for example consist of or comprise PLIXXOPOL^{®} FC 4800C010.

According to one embodiment, the polymer foam has an elastic modulus that is at most equal to an elastic modulus of the insulation layer.

According to one embodiment the elastic modulus of the polymer foam is smaller than the elastic modulus of the insulation layer.

Herein, the elastic modulus referred to is the elastic modulus at the initial state, i.e., at a zero-strain condition.

The elastic modulus referred to herein is at a temperature within the operating temperature range of the dynamic submarine power cable. The operating temperature range may be 10-100°C or 20-90°C.

According to one embodiment the elastic modulus of the polymer foam is at most 95%, at most 90%, at most 80%, at most 70%, or at most 60% of the elastic modulus of the insulation layer. The polymer foam may thus absorb part of the expansion of the insulation layer during a thermal heat cycle.

The stress threshold may be in a range of 5-15 MPa.

According to one embodiment the bedding layer is a single layer which exhibits compressive stress - compressive strain characteristics with a stress plateau with a stress plateau level in a range of 10-20 MPa.

According to one embodiment the stress plateau extends from the stress threshold up to a point in a range of 0.3-0.5 of compressive strain.

According to one embodiment the bedding layer exhibits an increase in stress at a higher rate than in the stress plateau after the compressive strain reaches a point in a range of 0.3-0.5.

According to one embodiment the inner layer is formed by the polymer foam.

According to one embodiment the bedding layer upon unloading has a recover rate of at least 60 %. The recovery rate of the bedding layer is thus at least 60% when decompressed.

There is according to a second aspect of the present disclosure provided a method of manufacturing a dynamic submarine power cable according to the first aspect, comprising: a) providing the conductor and the insulation system arranged around the conductor, b) providing a smooth metal sheath around the insulation system, wherein step b) involves longitudinally welding the metal sheath to form a smooth metallic water barrier, c) providing a bedding layer around the insulation system before step b), or in between the insulation system and the smooth metallic water barrier after step b), and d) corrugating the smooth metallic water barrier to obtain the corrugated metallic water barrier.

One embodiment comprises activating the bedding layer after step d).

The activation of the bedding layer may result in radial expansion of the bedding layer.

According to one embodiment the bedding layer is provided in liquid state after step b), wherein the activating involves heat activation of the bedding layer in liquid state to solidify and expand the bedding layer.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a transverse section of an example of a dynamic submarine power cable;
Fig. 2 is a longitudinal section along a portion of a dynamic submarine power cable with a symmetry line along the longitudinal axis of the dynamic submarine power cable;
Fig. 3 is a compressive stress - compressive strain diagram for an exemplary bedding layer; and
Fig. 4 is a flowchart of a method of manufacturing a dynamic submarine power cable.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

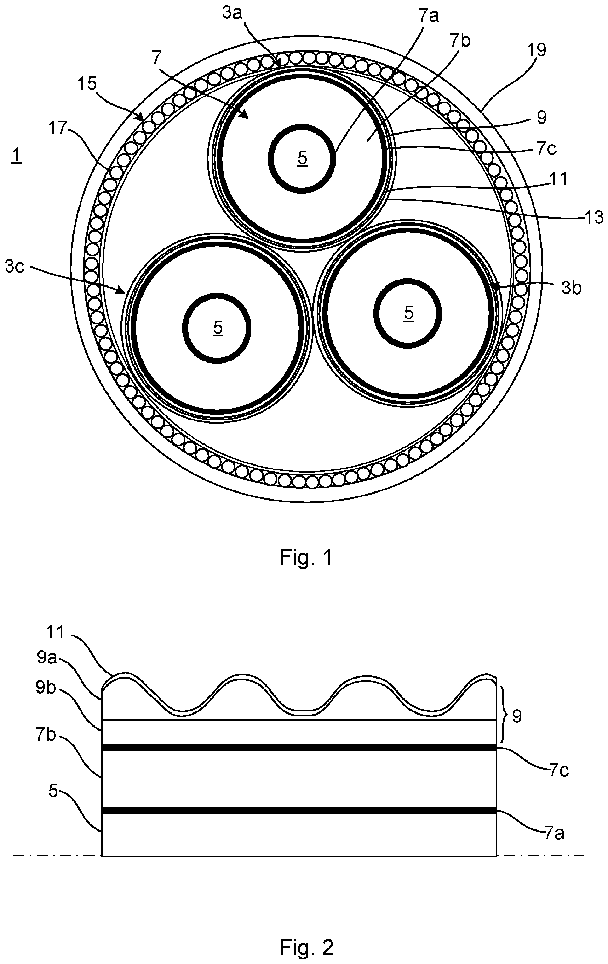

Fig. 1 shows an example of a dynamic submarine power cable 1. According to the example, the dynamic submarine power cable 1 comprises a plurality of stranded or twisted cores 3a-3c. Alternatively, the dynamic submarine power cable could be a single core cable.

According to the example, each core 3a-3c comprises a conductor 5, an insulation system 7 arranged around the conductor 5, a bedding layer 9 arranged around the insulation system 7, a corrugated metallic water barrier 11 arranged around the bedding layer 9, and a polymer sheath 13 arranged around the corrugated metallic water barrier 11. Alternatively, one of the cores may instead by a dummy core.

The insulation system 7 comprises an inner semiconducting layer 7a, and insulation layer 7b arranged around the inner semiconducting layer 7a, and an outer semiconducting layer 7c arranged around the insulation layer 7b.

The insulation system 7 may be an extruded insulation system.

The insulation layer 7b may comprise a thermosetting or thermoplastic polymer. The insulation layer 7b may comprise a polyolefin such as polyethylene, e.g., crosslinked polyethylene (XLPE), polypropylene, both homopolymer and copolymers, or an elastomer such as ethylene propylene diene monomer (EPDM) rubber or ethylene propylene (EPR) rubber.

The corrugated metallic water barrier 11 is corrugated in the axial direction of the dynamic submarine power cable 1.

The corrugated metallic water barrier 11 is longitudinally welded. The corrugated metallic water barrier 11 may for example comprise or consist of copper, or a copper alloy such as a copper-nickel alloy.

The bedding layer 9, which is arranged between the outer surface of the outer semiconducting layer 7c and the inner surface of the corrugated metallic water barrier 11 fills the corrugations, i.e., the space between the ridges and valleys of the corrugations. The bedding layer 9 preferably entirely fills the corrugations.

According to one example, the bedding layer 9 has a single layer that has an initial stiffness at onset of compressive stress to provide structural support against external hydrostatic pressure exerted on the metallic water barrier 11. The single layer of the bedding layer 9 has an increased elasticity as compared to the initial stiffness when the compressive stress has reached a stress threshold to absorb cyclic thermal expansion and contraction of the insulation layer 7b. The single layer may fill the corrugations of the corrugated metallic water barrier 11. Moreover, the single layer is arranged radially inside the corrugated metallic water barrier 11 and supports the corrugated metallic water barrier 11.

The single layer may be formed of a non-linear elastic material, i.e., a material that has a non-linear elasticity, which changes with the stress-strain state.

The single layer may exhibit a non-symmetric elastic behaviour. The stress-strain responses may thus be different under tension and compression.

According to one example, the bedding layer 9 consists of a single layer.

The bedding layer 9 may according to one example comprise an outer layer and an inner layer arranged radially inside of the outer layer. The outer layer is stiffer than the inner layer. The inner layer is thus more elastic than the outer layer. The outer layer fills the corrugations of the corrugated metallic water barrier 11 and the inner layer supports the corrugated metallic water barrier 11.

The bedding layer 9 may have a recovery rate of at least 60 %, or at least 70%, upon unloading. A 60% recovery rate means that if the radial thickness is released from a state in which it is compressed to 40% of its thickness in a relaxed state, the bedding layer 9 will fully recover its original thickness.

The polymer sheath 13 may be extruded onto the corrugated metallic water barrier 11.

The dynamic submarine power cable 1 may comprise helically arranged filler profiles, which are twisted together with the cores 3a-3c.

The dynamic submarine power cable 1 may comprise an armour 15 comprising one or more layers of armouring elements 17. The armour 15 is common to all cores 3a-3c and is arranged around the cores 3a-3c.

The dynamic submarine power cable 1 may also comprise an outer sheath or outer serving 19 arranged around the cores 3a-3c and around the armour 15 if present.

Fig. 2 shows an example of a multi-layer bedding layer 9. The bedding layer 9 comprises an outer layer 9a which fills the corrugations of the corrugated metallic water barrier 11, and an inner layer 9b arranged radially inside the outer layer 9a.

The outer layer 9a may for example comprise a non-foamed thermoplastic polyolefin. The outer layer 9a may be extruded.

The outer layer 9a may for example comprise polyethylene such as medium density polyethylene (MDPE) or high-density polyethylene (HDPE).

The inner layer 9b may for example comprise a polymer foam. The polymer foam may comprise a polyether polyol or a polyolefin such as an ethylene copolymer, e.g., EVA, EBA, EAA, or EPDM or silicone rubber.

The inner layer 9b preferably has a stiffness that is less than that of the insulation layer 7b, and of the insulation system 7 in general. The inner layer 9b may have an elastic modulus which is at most equal to the elastic modulus of the insulation layer 7b. The elastic modulus of the inner layer 9b may be at most 95%, at most 90%, at most 80%, at most 70%, at most 60%, or at most 50% of the elastic modulus of the insulation layer 7b.

If for example the insulation layer 7b is XLPE, then the elastic modulus of the inner layer 9b may be less than or equal to 70 MPa.

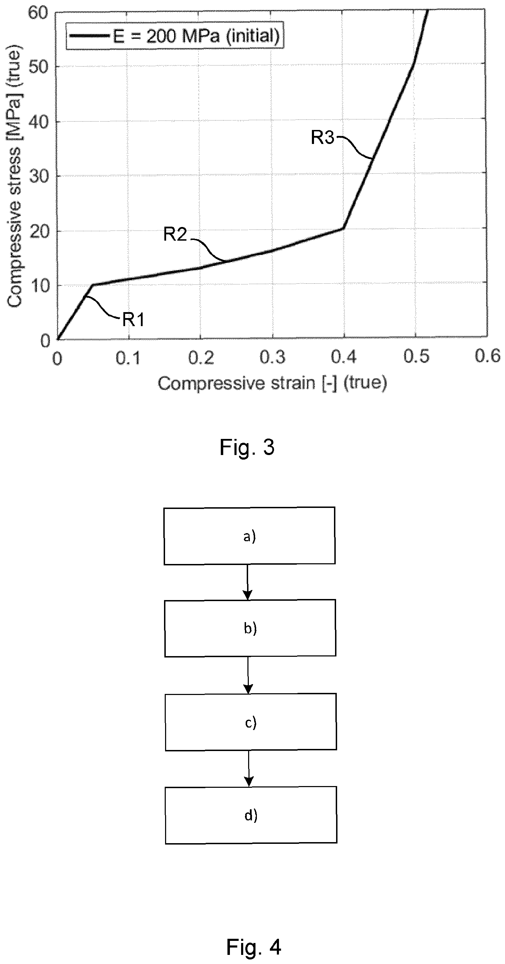

Fig. 3 shows the compressive stress - compressive strain characteristics of another example of the bedding layer 9. In particular, the exemplified compressive stress - compressive strain characteristics are those of a single layer of the bedding layer 9, providing both structural support against collapse of the corrugated metallic water barrier 1 due to the ambient hydrostatic pressure and accommodating the expansion-contraction cycles of the insulation layer 7b.

The bedding layer 9 has an initial stiffness at onset of compressive stress to provide structural support against external hydrostatic pressure exerted on the metallic water barrier 11. According to the example, the initial elastic compression is linear, illustrated by a first region R1 in Fig. 3. The single layer of the bedding layer 9 has an increased elasticity as compared to the initial stiffness when the compressive stress has reached a stress threshold to absorb cyclic thermal expansion and contraction of the insulation layer 7b. In the example shown in Fig. 3, the increased elasticity is obtained at a stress threshold of approximately 10 MPa. The bedding layer 9 then reaches a stress plateau with a stress plateau level in a range of approximately 10-20 MPa, illustrated by a second region R2 in Fig. 3. The stress plateau corresponds to collapsing of the bedding layer 9. Here, the compressive strain increases much faster than the level of compressive stress, i.e., the bedding layer 9 becomes more elastic than during initial compressive stress. The stress plateau level is dependent of the design of the corrugated metallic water barrier 11 and the maximum depth at which the dynamic submarine power cable 1 is to be installed. According to the example, the stress plateau is reached at about 0.05 of compressive strain, i.e., at the stress threshold. The stress plateau extends from the stress threshold up to about 0.4 of compressive strain. The exemplified bedding layer 9 exhibits an increase in stress at a higher rate than in the stress plateau after the compressive strain reaches 0.4, in a third region R3. At these higher compressive strain levels, the elasticity is thus reduced.

The single layer of the bedding layer 9 may have an elastic modulus which is at most equal to the elastic modulus of the insulation layer 7b. The elastic modulus of the bedding layer 9 may be at most 95%, at most 90%, at most 80%, at most 70%, at most 60%, or at most 50% of the elastic modulus of the insulation layer 7b.

If for example the insulation layer 7b is XLPE, then the elastic modulus of the single layer of the bedding layer 9 may be less than or equal to 70 MPa.

Fig. 4 is a flowchart of a method of manufacturing the dynamic submarine power cable 1.

In a step a) the conductor 5 and the insulation system 7 arranged around the conductor 5 is provided. The insulation system 7 may be extruded around the conductor 5. The insulation system 7 could alternatively be made of paper wound around the conductor 5.

In a step b) a smooth metal sheath is provided around the insulation system 7. Step b) further involves longitudinally welding the metal sheath to form a smooth metallic water barrier around the insulation system 7.

In a step c) the bedding layer 9 is provided or formed around the insulation system 7. Step c) may be performed before step b) or after step b).

If step c) is performed after step c) then bedding layer material may be injected or poured in liquid state into a gap between the insulation system 7 and the smooth metallic water barrier.

In a step d) the smooth metallic water barrier is corrugated to obtain the corrugated metallic water barrier 11. The smooth metallic water barrier is corrugated in a corrugation machine.

The bedding layer 9 may according to one example be activated after step d). The activating may involve heat activation of the bedding layer in liquid state to solidify and expand the bedding layer 9 such that it fills the corrugations of the corrugated metallic water barrier 11. The bedding layer 9 is in this case activated after the metallic water barrier 11 has been corrugated to facilitate the corrugation process.

Whether step c) is performed before or after step b) depends on the material of the bedding layer 9. A thick bedding layer 9 may according to one example be applied by extrusion before step b). The bedding layer 9 may in this case be radially compressed by the metallic water barrier in step b) and therefore no activation step may be required for filling the corrugations.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Dynamic submarine power cable (1) for deep-sea applications, comprising:
a conductor (5),
an insulation system (7) arranged around the conductor (5), the insulation system (7) comprising an inner semiconducting layer (7a) arranged around the conductor (5), an insulation layer (7b) arranged around the inner semiconducting layer (7a), and an outer semiconducting layer (7c) arranged around the insulation layer (7b),
a bedding layer (9) arranged around the insulation system (7), and
a longitudinally welded corrugated metallic water barrier (11) arranged around the bedding layer (9),
wherein the bedding layer (9) fills the corrugations of the corrugated metallic water barrier (11),
wherein the bedding layer (9) comprises a single layer which has an initial stiffness at onset of compressive stress to provide structural support against external hydrostatic pressure exerted on the metallic water barrier (11), and an increased elasticity as compared to the initial stiffness when the compressive stress has reached a stress threshold to absorb cyclic thermal expansion and contraction of the insulation layer (7), or
wherein the bedding layer (9) comprises an outer layer (9a) and an inner layer (9b), wherein the outer layer fills the corrugations and is stiffer than the inner layer (9b) and provides structural support against external hydrostatic pressure exerted on the corrugated metallic water barrier (11), the inner layer (9b) providing elasticity to absorb cyclic thermal expansion and contraction of the insulation layer (7)

2. Dynamic submarine power cable (1) as claimed in claim 1, wherein the bedding layer (9) comprises polymer foam.

3. Dynamic submarine power cable (1) as claimed in claim 2, wherein the polymer foam comprises a polyether polyol, a polyolefin, such as a thermoplastic polyolefin elastomer or an ethylene copolymer, or ethylene propylene diene monomer rubber, EPDM, or silicone rubber.

4. Dynamic submarine power cable (1) as claimed in claim 2 or 3, wherein the polymer foam has an elastic modulus that is at most equal to an elastic modulus of the insulation layer (7).

5. Dynamic submarine power cable (1) as claimed in claim 4, wherein the elastic modulus of the polymer foam is smaller than the elastic modulus of the insulation layer (7).

6. Dynamic submarine power cable (1) as claimed in claim 4, wherein the elastic modulus of the polymer foam is at most 95%, at most 90%, at most 80%, at most 70%, or at most 60% of the elastic modulus of the insulation layer (7).

7. Dynamic submarine power cable (1) as claimed in any of the preceding claims, wherein the bedding layer (9) is a single layer which exhibits compressive stress - compressive strain characteristics with a stress plateau with a stress plateau level in a range of 10-20 MPa.

8. Dynamic submarine power cable (1) as claimed in claim 7, wherein the stress plateau extends from the stress threshold up to a point in a range of 0.3-0.5 of compressive strain.

9. Dynamic submarine power cable (1) as claimed in claim 8, wherein the bedding layer (9) exhibits an increase in stress at a higher rate than in the stress plateau after the compressive strain reaches a point in a range of 0.3-0.5.

10. Dynamic submarine power cable (1) as claimed in any of claims 2-6, wherein the inner layer (9b) is formed by the polymer foam.

11. Dynamic submarine power cable (1) as claimed in any of the preceding claims, wherein the bedding layer (9) upon unloading has a recover rate of at least 60 %.

12. Method of manufacturing a dynamic submarine power cable (1) as claimed in any of the preceding claims, comprising:
a) providing the conductor (5) and the insulation system (7) arranged around the conductor,
b) providing a smooth metal sheath around the insulation system, wherein step b) involves longitudinally welding the metal sheath to form a smooth metallic water barrier,
c) providing a bedding layer (9) around the insulation system (7) before step b), or in between the insulation system (7) and the smooth metallic water barrier after step b), and
d) corrugating the smooth metallic water barrier to obtain the corrugated metallic water barrier (11).

13. Method as claimed in claim 12, comprising activating the bedding layer (9) after step d).

14. Method as claimed in claim 12, wherein the bedding layer (9) is provided in liquid state after step b), wherein the activating involves heat activation of the bedding layer (9) in liquid state to solidify and expand the bedding layer (9).
